Europäisches Patentamt

European Patent Office

Office européen des brevets

(11) Publication number: **0 376 614**
**A1**

# EUROPEAN PATENT APPLICATION

(21) Application number: **89313395.9**

(22) Date of filing: **20.12.89**

(51) Int. Cl.⁵: **B32B 27/36, B32B 27/10, B32B 15/08, B65D 1/10**

(30) Priority: **28.12.88 JP 331623/88**

(43) Date of publication of application:
**04.07.90 Bulletin 90/27**

(84) Designated Contracting States:
**AT BE CH DE ES FR GB GR IT LI LU NL SE**

(71) Applicant: **POLYPLASTICS CO. LTD.**
**3-13, Azuchicho, 2-chome**
**Chuo-Ku Osaka-shi Osaka(JP)**

(72) Inventor: **Nedzu, Shigeru**
**324 Miyashita**
**Fuji-shi Shizuoka(JP)**
Inventor: **Shimoda, Akihide**
**885-11, Miyajima**
**Fuji-shi Shizuoka(JP)**

(74) Representative: **Jackson, Peter et al**
**HYDE, HEIDE & O'DONNELL 146 Buckingham Palace Road**
**London SW1W 9TR(GB)**

(54) Container for citrus fruit juice.

(57) Citrus fruit juice can be preserved in a fresh condition in a laminated container comprising an innermost layer made of a molded resin film mainly comprising polybutylene terephthalate and having a saturation d-limonene adsorption of at most 3 mg per cm³ of film volume as measured by dipping a film of 50 μm in thickness and 30 cm² in one surface area in a substantially pure liquid d-limonene at 7° C.

EP 0 376 614 A1

## CONTAINER FOR CITRUS FRUIT JUICE

The present invention relates to a container for citrus fruit juice which comprises a polybutylene terephthalate resin film as the innermost layer, and which neither absorbs the fragrant components of citric fruit juice nor spoils the taste and fragrance thereof.

A variety of containers have heretofore been used as containers for preserving citrus fruit juice and the like in accordance with various requirements, such as commercialisation of the container or its effectiveness in preserving the juice. The different types of containers comprise bottles, pouches (including gusset pouches and standing pouches), bag-in-box containers (hereinafter referred to as "BIB"), and paper containers (including gable-top-shaped paper containers and brick-shaped paper containers). The BIB containers are typically used as large capacity containers for fruit juice.

Almost all of these types of container are made of a laminate material comprising a combination of paper, plastic, metal, etc.

The materials of these containers, though various in structure, basically comprise an outer layer having good physical strength (mechanical strength), printability, etc.; an intermediate layer with good barrier properties for oxygen, moisture, fragrance etc.; and an inner layer with good resistance to the contents, and having excellent sealability, sealing strength, etc. Most plastic-based laminate materials comprise an outer layer made of a polyethylene terephthalate resin, an oriented polyamide resin, polyethylene/paper, or the like; an intermediate layer made of an aluminium foil, an oriented polyamide resin, or the like; and an innermost layer made of a polyethylene resin, non-oriented polypropylene, a saponified ethylene-vinyl acetate copolymer, or the like.

However, the above-mentioned polyethylene resin, non-oriented polypropylene, saponified ethylene-vinyl acetate copolymer, etc., which are now used as the materials of the innermost layer, are in many cases so strong in a peculiar smell (sometimes called "polymer smell") as to spoil the taste and fragrance of fruit juice contained therein. Furthermore, they absorb the fragrant components (mainly d-limonene) of fruit juice to the further detriment of the taste and fragrance thereof, and hence are unsatisfactory as the material of the innermost layer.

A biaxially oriented polyethylene terephthalate resin film can be mentioned as an example of a material comparatively less liable to spoil the taste and fragrance of fruit juice, but it is unsuitable as a container material because of its poor heat sealability. From the viewpoint of sealability, a heat-sealable non-oriented polyethylene terephthalate resin film is potentially usable as the material of the inner layer of the container, but this film is unsuitable because it cannot withstand the step of sterilizing fruit juice (at about 70 to 80°C) due to its poor heat resistance.

Thus, there has been a strong demand for a resin film which has excellent sealability, sealing strength and heat resistance but does not spoil the taste and fragrance of the contained fruit juice. No such resin films have however been in practical use hitherto.

[Summary of Invention]

As a result of intensive investigations made in view of the foregoing problems for the purpose of providing improved containers for citrus fruit juice, the inventors of the present invention have found that a polybutylene terephthalate resin having a specific intrinsic viscosity is capable of forming a film having not only excellent mechanical strength, fragrance retention and heat resistance but also very little liability to adsorb d-limonene as a fragrant component of citrus fruit as well as an excellent resistance to d-limonene. The present invention has been completed based on this finding. Polybutylene terephthalate resins have heretofore been widely used as so-called engineering plastics in the reinforced form of a blend thereof with a reinforcement such as glass fibres, which have, however, been used exclusively to form injection moldings.

Specifically, the present invention provides a laminated container for citrus fruit juice, which comprises an innermost layer made of a molded resin film mainly comprising polybutylene terephthalate and having a saturation d-limonene adsorption of at most 3 $\mu$g per mm$^3$ [3 mg per cm$^3$] of film volume (as measured by dipping a film of 50 $\mu$m in thickness and 3000 mm$^2$ [30 cm$^2$] in one surface area in substantially pure [approximately 100%] liquid d-limonene at 7°C).

In other words, the present invention provides a laminated container for citrus fruit juice, which comprises an innermost layer made of a molded resin film mainly comprising polybutylene terephthalate and having a d-limonene adsorption of at most 1x10$^{-3}$ $\mu$g per mm$^2$ [1x10$^{-4}$ mg per cm$^2$] of film (as

2

measured by dipping a film of 50 $\mu$m in thickness and 3000 mm$^2$ [30 cm$^2$] in one surface area in a 20 ppm aqueous solution of d-limonene at 7$^\circ$C for 7 days).

The resin mainly comprising polybutylene terephthalate which satisfies one or both of the above-defined requirements is used in an innermost layer in contact with the contained fruit juice without detriment to the taste and fragrance thereof. The resin is not only free of taste and smell but is also excellent from the point of view of safety and hygiene. Thus, it is very suitable as a material for citrus fruit juice containers.

The type and shape of the container for citrus fruit juice are not particularly limited. Any type and shape as mentioned hereinbefore are adoptable in the present invention.

Although the structure of the material of the container is not particularly limited in so far as the aforementioned resin film mainly comprising polybutylene terephthalate is used in the innermost layer, a laminate structure wherein the innermost layer is laminated on paper, a plastic film, or a metallic foil such as an aluminium foil is generally preferable. Also, the container is formed from only polybutylene terephthalate through molding such as blow molding.

The aforementioned polybutylene terephthalate to be used in the present invention is prepared by a polycondensation reaction of 1,4-butanediol as one main monomer component with terephthalic acid or its lower alcohol ester as the other main monomer component. Copolymers and mixture mainly comprising polybutylene terephthalate are also usable.

In order to accomplish the object of the present invention, however, the resin film must have the aforementioned d-limonene absorption characteristics (resistance to d-limonene). From this point of view, the presence of components other than polybutylene terephthalate is naturally restricted.

Specifically, it is important from the viewpoint of minimizing a decrease in the amount of the fragrant components of the citrus fruit juice, thereby preventing the spoilage of the taste and fragrance thereof, that the polybutylene terephthalate resin film to be used in the present invention should have a saturation d-limonene adsorption of at most 3 $\mu$g per mm$^3$ [3 mg per cm$^3$] of film volume as measured by dipping a film of 50 $\mu$m in thickness and 3000 mm$^2$ [30 cm$^2$] in one surface area in substantially pure liquid (approximately 100%) d-limonene at 7$^\circ$C. When the above-mentioned saturation adsorption exceeds 3 $\mu$g per mm$^3$, the taste and fragrance of fruit juice are spoiled when it is preserved for a long period of time. Particularly when it is 10 $\mu$g per mm$^3$ or larger, the taste and fragrance of fruit juice are greatly spoiled. For example, a polyethylene film has a saturation d-limonene adsorption as large as about 30 $\mu$g per mm$^3$ under the above-mentioned conditions, so that it markedly spoils the taste and fragrance of fruit juice. Furthermore, it sometimes happens that a smell inherent in polyethylene is transferred to fruit juice. Therefore, the polyethylene film is unsuitable for use in containers for preserving citrus fruit juice.

It is also important from the viewpoint of prevention of the spoilage of the taste and fragrance of fruit juice that the polybutylene terephthalate resin film to be used in the present invention should have a d-limonene adsorption of at most $1\times10^{-3}$ $\mu$g per mm$^2$ [$1\times10^{-4}$ mg per cm$^2$] of film as measured by dipping a film of 50 $\mu$m in thickness and 3000 mm$^2$ [30 cm$^2$] in one surface area in a 20 ppm aqueous solution of d-limonene at 7$^\circ$C for the first 7 days. When the above-mentioned adsorption value exceeds $1\times10^{-3}$ $\mu$g per mm$^2$, the amount of the fragrant components of citrus fruit juice is rapidly decreased and shortens its storage life. For example, a polyethylene film has a d-limonene adsorption of about $5\times10^{-2}$$\mu$g per mm$^2$ [$5\times10^{-3}$ mg/cm$^2$] under the above-mentioned conditions for the first 7 days, so that it spoils the taste and fragrance of fruit juice in a short time.

In general, the concentration of d-limonene in citrus fruit juice is 10 to 30 ppm. Therefore, the initial d-limonene adsorption measured in a 20 ppm aqueous solution of d-limonene shows substantially the same tendency as that measured in common citrus fruit juice having a d-limonene concentration within the above-mentioned range.

In the present invention, it is particularly preferred to use a polybutylene terephthalate resin film satisfying at least one of the aforementioned two requirements (saturation adsorption and adsorption for the first 7 days), preferably both of them. In this case, the decrease in the amount of the fragrant components of fruit juice proceeds at a slow rate and occurs only to a slight extent and without detriment to the taste and fragrance of the fruit juice, thereby enabling the storage period to be prolonged. Thus the invention provides unprecedentedly excellent containers for citrus fruit juice.

The resin film mainly comprising polybutylene terephthalate may be molded either by the inflation method or by T-die extrusion. Any of co-extrusion, extrusion lamination, dry lamination, and wet lamination may be employed as the laminating method, and the most suitable laminating method may as well be chosen according to the characteristics of a base material on which lamination is to be done. For example, in the case of lamination on paper, polybutylene terephthalate resin film can be directly laminated on paper without any adhesive therebetween by extrusion lamination at low cost. In the case of lamination on a polyethylene terephthalate resin film, it is preferred that a polybutylene terephthalate resin be preliminarily molded into a film by the inflation method or T-die extrusion and the obtained film be laminated on a polyethylene terephthalate resin film with an adhesive therebetween by dry lamination. In this case, however, extrusion lamination or other lamination methods can, of course, be employed without any problem as described above.

The thickness of the polybutylene terephthalate resin film as the innermost layer is not particularly limited in the present invention. Even a very thin film of, for example, not more than 5 μm is effective if a material having a reinforcing effect is used in the outer layer. In general, however, the thickness is usually 10 μm or larger in view of the limitation thereof associated with film formation and lamination operations. It is a matter of course that a thicker polybutylene terephthalate resin film exhibits a greater effect.

The invention moreover provides a method for preserving citrus fruit juice, which comprising keeping the juice in a container as defined above.

The container of the present invention comprising an innermost layer made of a polybutylene terephthalate resin film is excellent in fragrance retention and free of not only any taste but also any peculiar smell like those inherent in a polyethylene resin film and a polypropylene film. Further, the container does not absorb detectable quantities of the fragrant components (mainly d-limonene) of fruit juice, and hence does not spoil the taste and fragrance of contained fruit juice. Furthermore, the present invention can provide containers of unprecedented type of citrus fruit juice in terms of capability of prolonging the preservation period of citrus fruit juice. Moreover, the present invention can provide economical containers for citrus fruit juice with a superior productivity when adequate consideration is given to the film forming method, the laminating method, etc.

[Examples]

The following Examples will illustrate the present invention, though they should not be construed as limiting the scope of the invention.

Examples 1 to 3

A polybutylene terephthalate resin film having a thickness of 50 μm was formed from a polybutylene terephthalate resin having an intrinsic viscosity of 1.4 with a conventional inflation molding machine. The film was cut into a size of 20 mm x 150 mm. The resulting samples with used to measure the saturation adsorption and initial adsorption thereof according to the aforementioned measurement methods.

Commercially available orange juice (POM ®) in an amount of 50 ml per sheet of the sample was put into glass containers. After the samples were dipped in the juice, the glass containers were purged with N₂ hermetrically closed with respective hermetically sealing glass stoppers, and placed in a refrigerator. After storage at 7°C for respective periods as listed in Table 1, a sample was taken out and the surface of the sample was well wiped with ethanol. Thereafter, the adsorbate on the film sample was extracted with 20 ml/sheet of ethanol. The extract was subjected to gas chromatography to determine the quantity of d-limonene, from which the adsorption of the-film sample was determined. Also, a change in the d-limonene concentration of the orange juice by the dipping was examined with changes in the taste and smell thereof. The results are shown in Table 1.

The taste and smell was organoleptically examined by 10 blindfolded panelists. The results of this organoleptic test are shown in terms of the number of panelists who have perceived some change.

Comparative Examples 1 to 6.

Samples were formed in substantially the same manner as that of Examples 1 to 3 except that films of low-density polyethylene resin (LDPE; trade name: Sumikasen L705) and an ionomer (10; trade name: Hi-milan) were respectively used instead of the polybutylene terephthalate resin (PBT) film. The quantitative determination of d-limonene was made in the same manner as that of Examples 1 to 3. Changes in the taste and smell of orange juice were examined. The results are shown in Table 1.

Examples 4 to 8 and Comparative Examples 7 to 12.

4

Resin films having a thickness of 60 μm and respectively made of materials as listed in Table 2 and being the same as those used in Examples 1 to 3 and Comparative Examples 1 to 6 were dipped in d-limonene (reagent; concentration: 100%) instead of orange juice to measure the d-limonene adsorptions thereof. The results are shown in Table 2.

Examples 9 and Comparative Examples 13 and 14.

Orange juice bags having the following respective structures were respectively formed from PBT, LDPE, and 10 with a bag-making machine according to a customary method. The bags were sized 10 cm wide and 15 cm long. The bags were filled with orange juice and sterilized by heating to 80°C, after which the states of the bags were examined as indicators of their heat resistances. Thereafter, the bags filled with the orange juice were cooled to ordinary temperature, stored in a refrigerator at 7°C for 7 days, and opened to examine changes in the test and smell of the juice. The results are shown in Table 3.

|  | Inner Layer | Intermediate layer | Outer layer |
|---|---|---|---|
| Ex. 9 | PBT (60 μm) / | Al (9 μm) / | PET (12 μm) |
| Comp. Ex.13 | LDPE(60 μm)/ | Al (9 μm) / | PET (12 μm) |
| Comp. Ex.14 | lO (60 μm)/ | Al (9 μm) / | PET (12 μm) |

Table 1

| | | | | Ex. 1 ~ 3 | Comp. Ex. 1 ~ 3 | Comp. Ex. 4 ~ 6 |
|---|---|---|---|---|---|---|
| | | | | PBT | LDPH | IO |
| Satn. adsorption ($\mu$g/mm$^3$) of film in 100% d-limonene at 7°C | | | | 0.5 | 30 | 32 |
| Adsorption ($\mu$g/mm$^2$) of film in 20 ppm aq. d-limonene soln. at 7°C for first 7 days | | | | almost 0 | $5 \times 10^{-2}$ | $5 \times 10^{-2}$ |
| Commercially available orange juice | Days of storage | 0 day | adsorption of film ($\mu$g/mm$^2$) | 0 | 0 | 0 |
| | | | d-limonene concn. of juice (ppm) | 20 | 20 | 20 |
| | | 7 days | adsorption of film ($\mu$g/mm$^2$) | almost 0 | $4.5 \times 10^{-2}$ | $4.7 \times 10^{-2}$ |
| | | | d-limonene concn. of juice (ppm) | 21 * | 15.9 | 15.8 |
| | | | change in taste | 0 | 7 | 8 |
| | | | change in smell | 0 | 8 | 8 |
| | | 15 days | adsorption of film ($\mu$g/mm$^2$) | almost 0 | $11.3 \times 10^{-2}$ | $9.4 \times 10^{-2}$ |
| | | | d-limonene concn. of juice (ppm) | 22 * | 11.4 | 13.0 |
| | | | change in taste | 0 | 9 | 9 |
| | | | change in smell | 0 | 9 | 9 |
| | | 30 days | adsorption of film ($\mu$g/mm$^2$) | almost 0 | $11.3 \times 10^{-2}$ | $10.6 \times 10^{-2}$ |
| | | | d-limonene concn. of juice (ppm) | 23 * | 11.6 | 12.5 |
| | | | change in taste | 0 | 10 | 10 |
| | | | change in smell | 0 | 10 | 10 |

* The amount of d-limonene was slightly increased because the juice components were decomposed during storage to form d-limonene.

Table 2

| | Film material | d-Limonene adsorption (μg/mm ) | | | | |
|---|---|---|---|---|---|---|
| | | 7 days | 15 days | 30 days | 150 days | 180 days |
| Ex. 4 ∼ 8 | PBT | 0.0 | 0.0 | 2.0 | 5.0 | 5.0 |
| Comp. Ex. 7 ∼ 9 | LDPE | 240 | 290 | 280 | - | - |
| Comp. Ex. 10 ∼ 12 | IO | 300 | 320 | 320 | - | - |

Table 3

| | | State of bag | Taste [1] | Smell [2] |
|---|---|---|---|---|
| Ex. 9 | PBT bag | no change | 0 | 0 |
| Comp. Ex. 13 | LDPE bag | no change | 7 | 8 |
| Comp. Ex. 14 | IO bag | partially deformed | 8 | 8 |
| [1, 2] The organoleptic test on taste and smell was conducted in the same manner as that of Ex. 1. | | | | |

**Claims**

1. A laminated container for citrus fruit juice, which comprises an innermost layer made of a molded resin film mainly comprising polybutylene terephthalate and having a saturation d-limonene adsorption of at most 3 μg per mm$^3$ [3 mg per cm$^3$] of film volume (as measured by dipping a film of 50 μm in thickness and 3000 mm$^2$ [30 cm$^2$] in one surface area in substantially pure liquid d-limonene at 7° C).

2. A laminated container for citrus fruit juice, which comprises an innermost layer made of a molded resin film mainly comprising polybutylene terephthalate and having a d-limonene adsorption of at most 1x10$^{-3}$ μg per mm$^2$ [1x10$^{-4}$ mg per cm$^2$] of film (as measured by dipping a film of 50 μm in thickness and 3000 mm$^2$ [30 cm$^2$] in one surface area in a 20 ppm aqueous solution of d-limonene at 7° C for 7 days).

3. A laminated container for citrus fruit juice, which comprises an innermost layer made of a molded resin film mainly comprising polybutylene terephthalate and having a saturation d-limonene adsorption of both at most 3 μg per mm$^3$ [3 mg per cm$^3$] of film volume (as measured by dipping a film of 50 μm in thickness and 3000 mm$^2$ [30 cm$^2$] in one surface area in substantially pure liquid d-limonene at 7° C) and at most 1x10$^{-3}$ μg per mm$^2$ [1x10$^{-4}$ mg per cm$^2$] of film (as measured by dipping a film of 50 μm in thickness and 3000 mm$^2$ [30 cm$^2$] in one surface area in a 20 ppm aqueous solution of d-limonene at 7° C for 7 days).

4. A laminated container for citrus fruit juice, which comprises an innermost layer made of a molded resin film mainly comprising polybutylene terephthalate, said innermost layer being laminated on paper, a plastic film or a metallic foil.

5. A laminated container as claimed in any preceding claim, wherein the resin film is a copolymer or mixture mainly comprising polybutylene terephthalate.

6. A laminated container as claimed in any preceding claim, wherein the laminate has been formed preliminary molding of a polybutylene terephthalate film followed by dry lamination of the polybutylene terephthalate film on a polyethylene terephthalate film with an adhesive therebetween.

7. A laminated container as claimed in any preceding claim, wherein the resin film has a thickness of at least 5μm.

8. A laminated container as claimed in any preceding claim, wherein the resin film has a thickness of at

least 10μm.

9. A laminated container as claimed in any preceding claim, which is a container for orange juice.

10. A method for preserving citrus fruit juice, which comprises keeping the juice in a laminated container as defined in any preceding claim.

**EUROPEAN SEARCH REPORT**

Application number

| | DOCUMENTS CONSIDERED TO BE RELEVANT | | EP 89313395.9 |
|---|---|---|---|

| Category | Citation of document with indication, where appropriate, of relevant passages | Relevant to claim | CLASSIFICATION OF THE APPLICATION (Int. Cl⁵) |
|---|---|---|---|
| Y | <u>EP - B1 - 0 041 713</u> (NIHON MATAI COMPANY LIMITED) * Claims; column 3, lines 10-20 * -- | 1-10 | B 32 B 27/36 B 32 B 27/10 B 32 B 15/08 B 65 D 1/10 |
| Y | DATABASE WPIL, No. 87 298 885 DERWENT PUBLICATIONS LTD., London * Abstract * & AU-A-69 663/87 (INT. PAPER CO.) 10-09-1987 -- | 1-10 | |
| A | DATABASE WPIL, No. 87-196 416 DERWENT PUBLICATIONS LTD., London * Abstract * & JP-A-62-127 223 (TEIJIN K.K.) ---- | | |

| | TECHNICAL FIELDS SEARCHED (Int Cl⁵) |
|---|---|
| | B 32 B B 65 D C 08 J |

The present search report has been drawn up for all claims

| Place of search | Date of completion of the search | Examiner |
|---|---|---|
| VIENNA | 02-04-1990 | WEIGERSTORFE |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82